# EUROPEAN PATENT APPLICATION

(11) **EP 2 308 922 A1**
(43) Date of publication of application: **13.04.2011**
(21) Application number: 09172604.2
(22) Date of filing: 08.10.2009
(51) Int. Cl.: C08L 23/06, D01F 6/04, D01D 5/06

(54) **Ultra-high molecular weight polyethylene (uhmwpe)/inorganic nanocomposite material and high performance fiber manufacturing method thereof**

(71) Applicant: Hong Jen Textile Co. Ltd., Taipei City 103 (TW); Yeh, Jen-Taut, Taipei 106 (TW)
(72) Inventor: Yeh, Jen-Taut, 106, Taipei City (TW); Chou, Fang-Juei, 103, Taipei (TW); Yu, Chun-Ping, 103, Taipei (TW); Chen, Kan-Nan, 103, Taipei (TW); Yu, Li-Chun, 103, Taipei (TW); Lai, Yu-Ching, 106, Taipei (TW); Yeh, Jen-Taut, 106, Taipei (TW)
(74) Representative: Lang, Christian

(57) **Abstract**

The present invention discloses an ultra-high molecular weight polyethylene (UHMWPE)/inorganic nanocomposite material and a high performance fiber manufacturing method using UHMWPE and a dispersed inorganic nano substance (such as attapulgite, carbon nano-tube, sepiolite, wollastonite and montmorillonite) to prepare a gel solution. The gel solution having a light transmittance approaching zero at a certain concentration is heated, dissolved and gone through processes including vacuum debubbling, sudden air cooling, water-phase solidification, and multi-stage temperature-change drawing for a spinning by using different conditions of a spinneret (including different spinneret angles, in-feed lengths and out-feed lengths) to obtain a composite material composed of high-tenacity fibers and having a light transmittance approaching to zero, so as to increase the fiber strength and modulus of the UHMWPE and overcome the drawbacks of high crimp, creep, and light transmission of the high molecular weight polyethylene fiber.

## Description

### BACKGROUND OF THE INVENTION

### 1. FIELD OF THE INVENTION

The present invention relates to an ultra-high molecular weight polyethylene/inorganic nanocomposite material and a high-performance fiber manufacturing method thereof, in particular to a composite material made by adding and mixing an inorganic nano substance (such as attapulgite, carbon nano-tube, sepiolite, wollastonite, montmorillonite or other equivalent inorganic substances) into an ultra-high molecular weight polyethylene (UHMWPE) gel solution uniformly, and processing the solution with a predetermined manufacturing process (including sudden air cooling, water-phase solidification and multi-stage temperature-changing drawing processes) to obtain the composite material composed of high-tenacity fibers and having a light transmittance approaching zero, increase the fiber strength of the ultra-high molecular weight polyethylene, and provide a low crimp, a low light transmission and a low creep at the same time, so that the composite material is practical and useful in related industries.

### 2. DESCRIPTION OF RELATED ART

In recent years, an ultra-high molecular weight polyethylene (UHMWPE) fiber is developed after high-performance fibers such as carbon fibers and aromatic polyamides have been introduced. Since the UHMWPE fiber features high strength, modulus, wearing resistance, corrosion resistance and light resistance, therefore the UHMWPE fiber can be used extensively in many different areas including marine engineering applications, such as anchoring super tankers and offshore platforms as well as fixing light towers, and the UHMWPE fiber can also overcome the drawbacks of traditional steel cables which will be rusted easily after being submerged in seawater, and traditional nylon or polyester ropes which will be corroded and decomposed by seawater or degenerated by ultraviolet lights or even cracked and broken after it has been used for a while. In aeronautical engineering applications, the UHMWPE fiber can be applied to a retardation parachute of an airplane and a rope for hanging heavy objects. In military applications, the UHMWPE fiber can be applied to armor casings, radar protective hoods, and hamlets. In addition, the UHMWPE fiber can be used for making various types of woven fabrics including gloves, woven suitcase cloths, sport equipments (such as bow strings, kite lines, snow-ski sleds and water-ski boards, etc), and safety protection garments (such as bulletproof vests, stab-resistant vests, explosion-suppression blankets and cut-resistant gloves, etc), wherein the ultra-high molecular weight polyethylene fiber applied as a material for making bulletproof vests can be manufactured at a low temperature condition, and the properties of lightweight, impact resistance, energy absorption and bulletproof effect of the UHMWPE fiber are better than those of the aromatic fibers.

However, the UHMWPE fiber still has the drawbacks of high crimp, light transmittance and creep as well as low heat resistance, and thus the traditional UHMWPE fiber requires immediate improvements.

The aforementioned way of manufacturing an ultra-high molecular weight polyethylene/inorganic nanocomposite material and a gel-spinning technology of the high-performance fiber are disclosed in published gel-spinning technologies and related process patents by DSM Company of Netherland and Allied Company of the U.S.A. and most of these patents have been expired in recent years, and there are two non-expired patents emphasizing on products manufactured by high molecular weigh polyethylene of a lower molecular weight and having a strength not exceeding 1.6 GPa. Unlike the prior arts, the present invention provides a novel manufacturing process to achieve better results than the aforementioned manufacturing methods.

Gel-spinning technology related U.S. patents are listed in the following table:

| U.S. Pat. No. | Expiration Date | Patentee | Class | Major Claims |
|---|---|---|---|---|
| 4,344,908 | 1999/08/17 | DSM | Process | ● Limited to 1 ∼ 5 % solution |
| | | | | ● > 25 % solvent during drawing |
| 4,422,993 | 2000/12/27 | DSM | Process | ● M_{w} > 8 x 10⁵ |
| | | | | ● Drawing at 75 ∼ 135 °C |
| 4,430,383 | 2001/02/07 | DSM | Product | ● M_{w} > 8 X 10⁵ |
| 4,436,689 | 2001/03/13 | DSM | Process | ● M_{w} > 4 x 10⁵, M_{w}/ Mₙ < 5, |
| | | | | > 5 % copolymer 3 ∼ 8 carbons |
| | | | | ● No M_{w} limit but drawing with simultaneous twisting |
| | | | | ● High molecular weight polymer and/or copolymer |
| 4,413,110 | 2000/10/01 | Allied | product | ● M_{w} > 5 x 10⁵, drawing > 147°C |
| | | | | ● M_{w} > 10 x 10⁵, M_{w} = 20 ∼ 80 x 10⁵ |
| 4,455,273 | 2001/07/19 | Allied | process | ● Molecular weight not in claims; species cited > 5 x10⁵ |
| | | | | ● Limited to extraction and gel spinning processes |
| | | | | ● Claims include polymeric additives |
| 7,056,579 | 2022/08/02 | Toyo Boseki Kabushiki Kaisha | product | ● M_{w} >3 x 10⁵, M_{w/} Mₙ > 4 |
| | | | | ● Polyethylene filament tenacity > 15 cN/dtex |
| 7,141,301 | 2025/04/15 | Toyo Boseki Kabushiki Kaisha | product | ● M_{w} = 0.5 ∼ 1.5 x 10⁵, M_{w/} Mₙ > 3 |
| | | | | Polyethylene filament tensile strenth > 15 cN/dtex and tensile elastic modulus > 300 cN/dtex |

### SUMMARY OF THE INVENTION

Therefore, it is a primary objective of the present invention to provide an ultra-high molecular weight polyethylene/inorganic nanocomposite material and a high-performance fiber manufacturing method thereof, wherein UHMWPE and an inorganic nano substance (such as attapulgite, carbon nano-tube, sepiolite, wollastonite, montmorillonite, and other inorganic substances) are dispersed uniformly to manufacture an ultra-high molecular weight polyethylene complex gel solution, and processed by heating, dissolving and vacuum debubbling procedures for the spinning at different spinneret conditions (including different angles, feed-in lengths and feed-out lengths), sudden air cooling, water-phase solidification and multi-stage temperature-changing drawing processes to obtain a composite material composed of high-tenacity fibers and having a light transmittance approaching to zero, so as to increase the strength of the UHMWPE fiber.

Another objective of the present invention is to provide an ultra-high molecular weight polyethylene/inorganic nanocomposite material and a high-performance fiber manufacturing method thereof, wherein the manufacturing method can be used for producing a composite material of high-tenacity fibers having the features of a lower crimp, a smaller light transmittance and a lower creep than the conventional UHMWPE fiber.

A further objective of the present invention is to provide an ultra-high molecular weight polyethylene/inorganic nanocomposite material and a high-performance fiber manufacturing method thereof, wherein the composite material can be applied in marine engineering and aeronautical engineering areas for manufacturing military armor casings, radar protection hoods, sport equipments or safety protections such as bulletproof vests, etc. wherein the composite material applied for making the bulletproof vests not only comes with a light weight and a low light transmittance, but also provides an excellent bulletproof effect.

### BRIEF DESCRIPTION OF THE DRAWINGS

The invention, as well as its many advantages, may be further understood by the following detailed description and drawings in which:
Fig. 1 is a flow chart of the present invention; and
Fig. 2 is a schematic view of a preferred embodiment of the present invention.

### DETAILED DESCRIPTION OF THE INVENTION

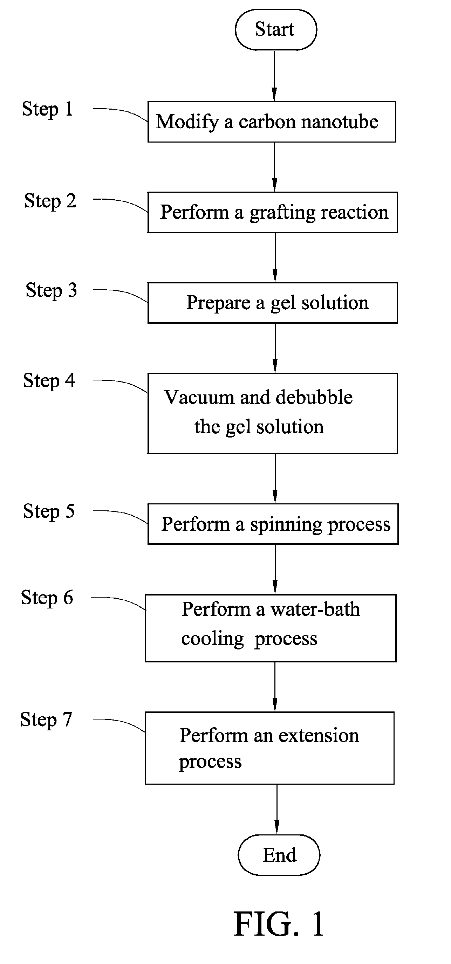

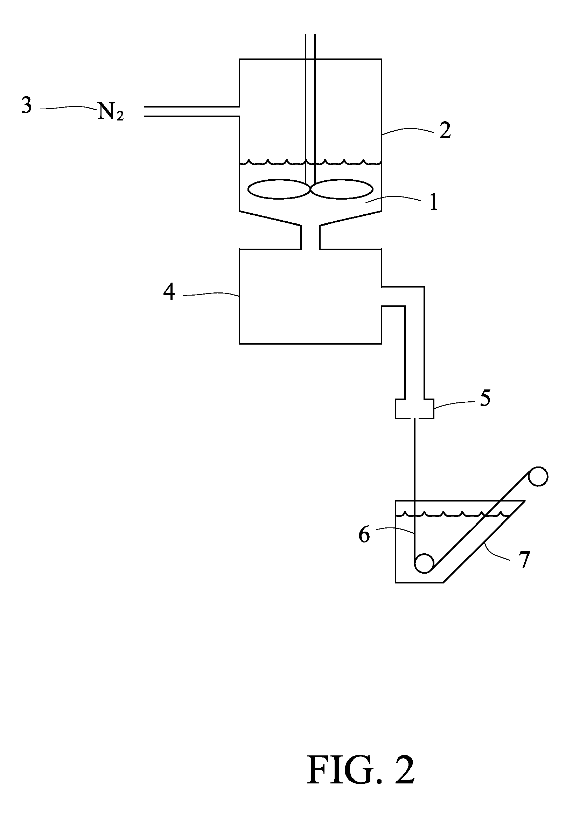

In an ultra-high molecular weight polyethylene/inorganic nanocomposite material and its high-performance fiber manufacturing method in accordance with the present invention, the composite material comprises an ultra-high molecular weight polyethylene (UHMWPE) having a molecular weight of 1,000,000∼10,000,000 and an inorganic nano substance (such as attapulgite, carbon nano-tube, sepiolite, wollastonite, montmorillonite, and other inorganic substances) processed by a series of predetermined manufacturing processes (including a sudden air cooling, a water-phase solidification and a multi-stage temperature-changing drawing) to obtain a composite material of high-tenacity fibers having a light transmittance approaching to zero. With reference to Figs. 1 and 2, the predetermined manufacturing processes (including sudden air cooling, water-phase solidification and multi-stage temperature-changing drawing processes) comprise the following steps:
Step 1 modifies an inorganic nano substance (such as attapulgite, carbon nano-tube, sepiolite, wollastonite and montmorillonite, etc). The inorganic nano substance (such as attapulgite, carbon nano-tube, sepiolite, wollastonite, montmorillonite, and other inorganic substances having a specific surface area of 100∼1000m²/g) is processed by carboxylation, such that its end-group becomes a carboxyl group (COOH).
Step 2 performs a grafting reaction. A grafting agent which is a carboxyl group of functional polyethylene, tetraethoxysilane (TEOS), (C₂H₅O)₄Si), epoxy group or maleicanhydride, propenic acid, methacrylic acid or succinic acid is used in the present invention for performing a grafting reaction for the modified inorganic nano substance (such as attapulgite, carbon nano-tube, sepiolite, wollastonite, montmorillonite, and any other equivalent inorganic substance).
Step 3 prepares a gel solution 1. A solvent which is decalin (decahydronaphthalin) (C₁₀H₁₈) in the present invention and the inorganic nano substance (such as attapulgite, carbon nano-tube, sepiolite, wollastonite, montmorillonite, and other inorganic substances having a content of 10 wt% of the gel solution processed by the grafting reaction of the supersonic vibration are added to the ultra-high molecular weight polyethylene (UHMWPE), and finally heated and dissolved in an oil bath tank (not shown in the figure) at a first predetermined temperature (which is 100∼150°C adopted in the present invention) for a first predetermined time (which is 1∼5 hours adopted in the present invention) to obtain a gel solution 1 (having a concentration of 10∼300 kg/m³ and a light transmittance of zero).
Step 4 performs a vacuum and debubbling process. Since air bubbles are contained in the gel solution 1, and the fibers may be cracked or broken easily due to its non-uniformity occurred during the spinning process of the gel solution 1, therefore the gel solution 1 is poured into a spinning tank 2 first, and then a vacuum pump is used for vacuum production and debubbling of the gel solution.
Step 5 performs a spinning process. A gas 3 (which is nitrogen gas (N₂) used in the present invention) or a double-screw system used in the gel solution is pushed into a pump 4 (which is a gear pump used in the present invention), and then the pump 4 is compressed to various spinneret angles, and feed-in/feed-out lengths of a spinneret 5 (which is a dry-jet used in the present invention), and a gel fiber 6, which is a semi-transparent liquid long fiber is extruded at a second predetermined temperature (which is 150∼180°C in the present invention) and at a first predetermined speed (which is equal to 1∼300m/min in the present invention).
Step 6 performs a sudden air cooling process and a water-phase solidification cooling process. The gel fiber 6 is placed into an air and water bath tank 7 at a third predetermined temperature (which is 0∼60°C in the present invention) for cooling, condensing and solidifying the gel fiber 6 into an as-spun fiber.
Step 7 performs an extension process. Finally, a thermal extension machine (not shown in the figure) is used for performing a first-stage constant temperature extension of the as-spun fiber of a predetermined multiple (which is 1.2∼20 times in the present invention) at a fourth predetermined temperature (which is 70∼140°C in the present invention), and then performing a second-stage constant temperature extension at a fifth predetermined temperature (which is 70∼140°C in the present invention), and the extension processes are performed at a second predetermined speed (which is 10∼300 mm/min in the present invention) to obtain a composite material of the high-tenacity fiber.

In the present invention, if the gel solution 1 of the ultra-high molecular weight polyethylene (UHMWPE) has a concentration of 10∼300 kg/m³, and the content of inorganic nano substance (such as attapulgite, carbon nano-tube, sepiolite, wollastonite, montmorillonite, and other inorganic substances) is below 10 wt%, and a light transmittance of the gel solution 1 approaches zero, an as-spun fiber is prepared from the gel solution 1 processed at different spinneret angles (50∼150°) and in different feed-in/feed-out lengths (1∼30mm) and several constant temperature extension procedures, then the composite material of the high-tenacity fiber has a strength up to 12.5GPa.

The gel solution 1 of the ultra-high molecular weight polyethylene (UHMWPE) having a concentration of 10∼300 kg/m³ is added with an inorganic nano substance such as carbon nano-tube and attapulgite as illustrated below:

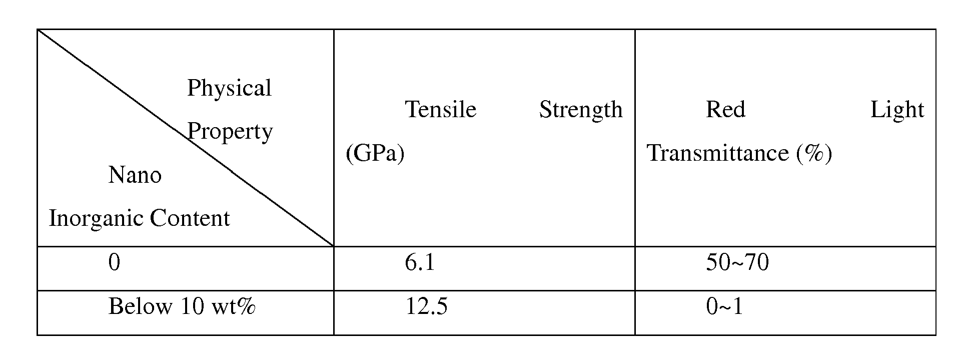

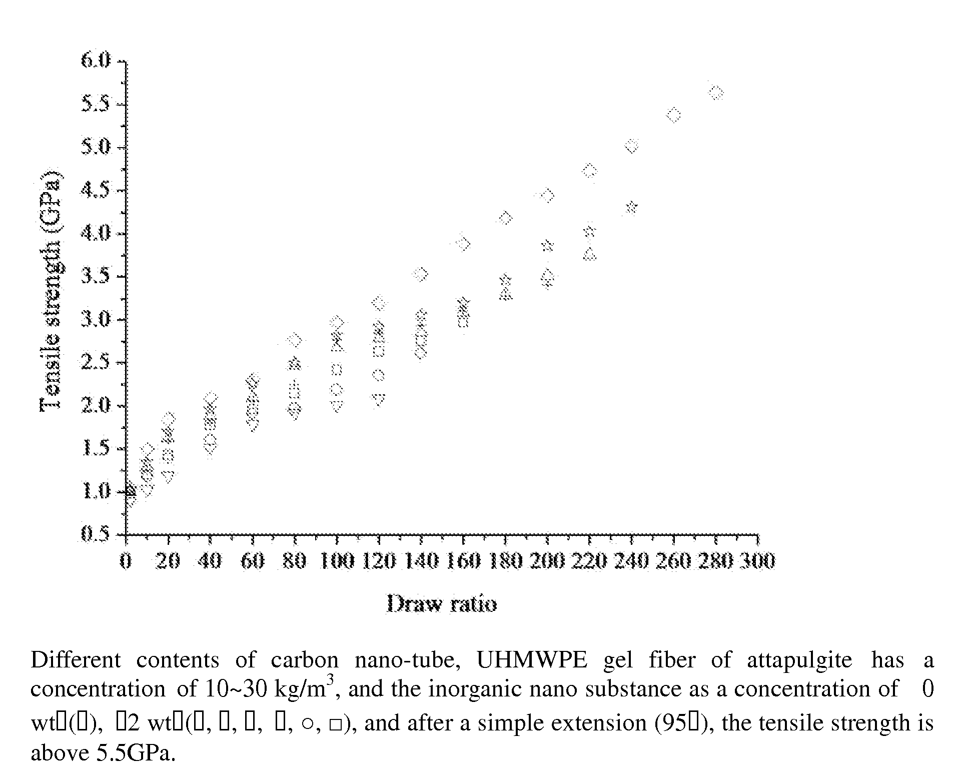

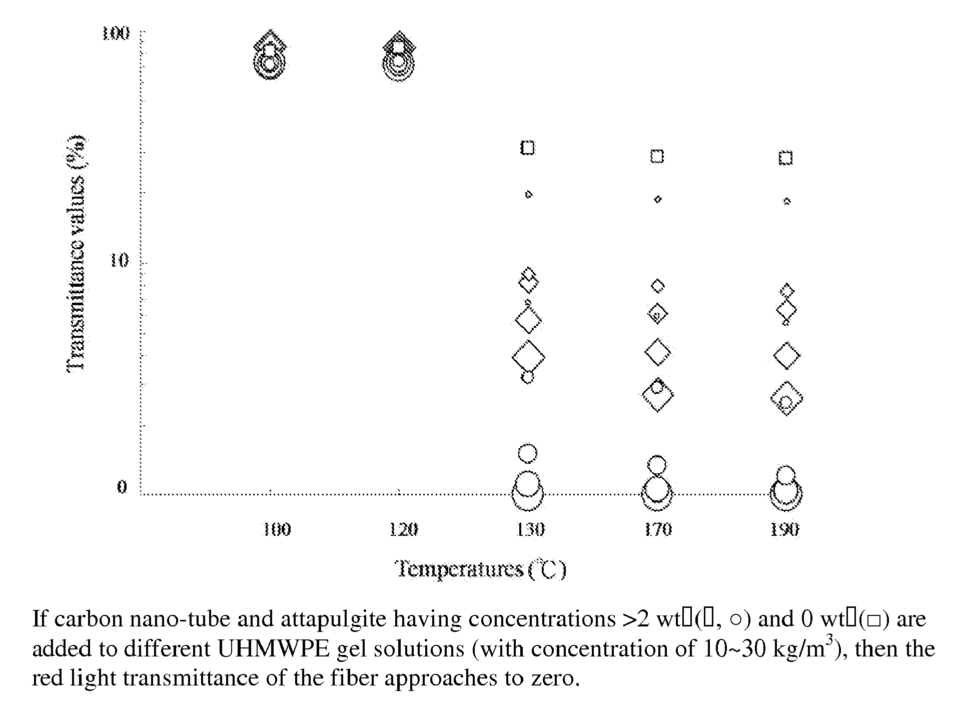

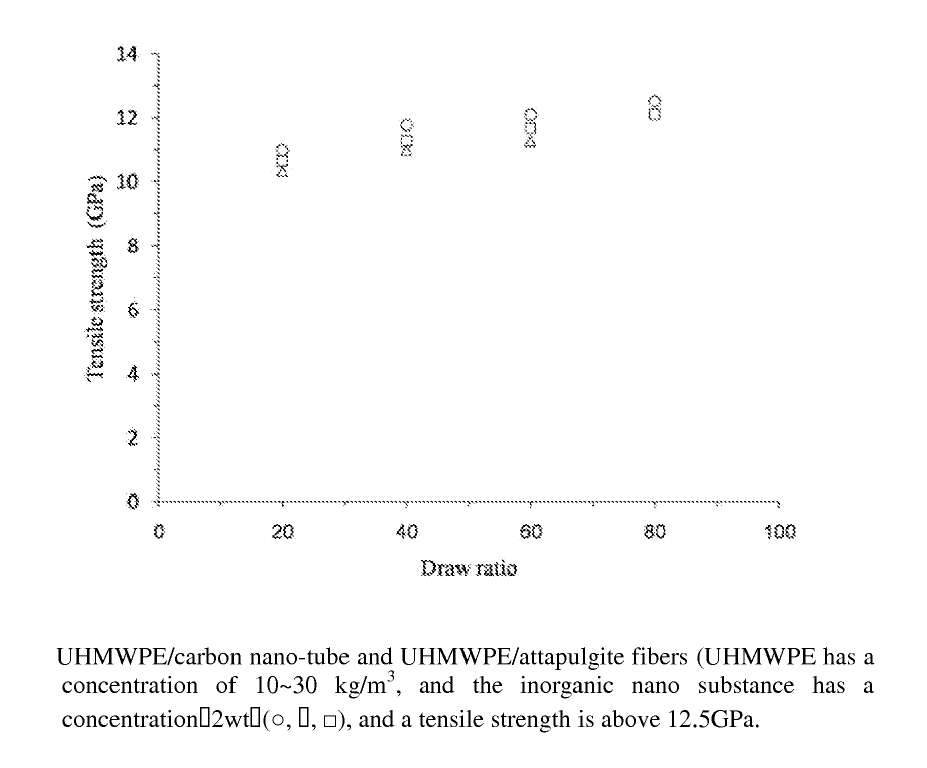

T he testing results obtained from different conditions such as different temperatures and contents of the procedures measured in the present invention are described as follows:
If the ultra-high molecular weight polyethylene (UHMWPE and the inorganic nano substance (such as attapulgite, carbon nano-tube, sepiolite, wollastonite, montmorillonite, and other inorganic substances) are heated and dissolved at 100∼150°C, most of the crystals in the gel solution 1 will be dissolved, such that the ultra-high molecular weight polyethylene (UHMWPE) molecules will move and penetrate in the gel solution 1 to form a stable tangled network structure. Even if some crystals cannot be dissolved, the gel solution 1 still has the nature of a solid. With the carbon nano-tube or inorganic substance, the network structure can be enhanced significantly.

If the ultra-high molecular weight polyethylene (UHMWPE) and the inorganic nano substance (such as attapulgite, carbon nano-tube, sepiolite, wollastonite, montmorillonite, and other inorganic substances) are heated and dissolved at a temperature over 140°C, the ultra-high molecular weight polyethylene (UHMWPE) molecules will increase with the temperature, and the motion of molecular bonds will become severer, such that almost all of the ultra-high molecular weight polyethylene (UHMWPE) crystals in the gel solution 1 will be dissolved, and some of the ultra-high molecular weight molecules will have a partial salvation, and thus the following predictive phenomenon can be observed. If the gel solution 1 is at a temperature over 140°C, the ultra-high molecular weight polyethylene (UHMWPE) and the carbon nano-tube or inorganic molecules may be thermally degraded, so that the network structure can be untangled in the spinning process. As the temperature increases, the shear viscosity of the gel solution 1 decreases drastically. From the foregoing results, the shear viscosity of the gel solution 1 can be maximized at 130∼150°C.

Testing results show that the as-spun fiber prepared at 0∼10°C has better forward direction of a precursor similar to a shish-kebab, two refractive index, and crystallization than the as-spun fibers prepared with other conditions, and these microstructures can appropriately detangle and effectively pull the ultra-high molecular weight polyethylene (UHMWPE) molecules out from a crystal palette during the thermal extension process, and thus the tightly bonded molecules will not be destroyed so easily, and such microstructures are more suitable for a high power extension in a later-stage thermal extension process.

The aforementioned inorganic nano substance (such as attapulgite, carbon nano-tube, sepiolite, wollastonite, montmorillonite, and other inorganic substances) with the best contents and the inorganic substance (such as attapulgite, carbon nano-tube, sepiolite, wollastonite, montmorillonite, and other inorganic substances) in the as-spun fiber can be dispersed appropriately in a forward direction to pay the role of a nucleating agent in crystallization and solidification processes of the spinning and accelerate nucleating the ultra-high molecular weight polyethylene (UHMWPE) into a smaller crystal lump and provide an easier unfolding or detangling way for the heating extension process, so as to maximize the extensibility for the extension process. However, if the inorganic nano substance (such as attapulgite, carbon nano-tube, sepiolite, wollastonite, montmorillonite, and other inorganic substances) has a too-high content, the stress will be concentrated during the extension process, such that the fibers may be cracked or broken at an early stage of the extension process.

In summation of the description above, the present invention has the following characteristics:
1. The present invention is novel and improves over the prior art, since the inorganic nano substance (such as attapulgite, carbon nano-tube, sepiolite, wollastonite, montmorillonite, and other inorganic substances) is added into the ultra-high molecular weight polyethylene (UHMWPE) in accordance with the present invention, and processed by a predetermined manufacturing process (including a sudden air cooling, water-phase solidification and a multi-stage temperature-changing drawing) to obtain the composite material of the inorganic nano substance fiber and overcome the shortcomings of an easy crimp, a poor creep resistance and a high light transmittance of the ultra-high molecular weight polyethylene (UHMWPE).
2. The present invention is useful, since the predetermined manufacture process of the present invention is simple and easy, and can improve the fiber strength of the ultra-high molecular weight polyethylene (UHMWPE).

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An ultra-high molecular weight polyethylene/inorganic nanocomposite material, particularly a composite material of high-tenacity fibers formed by adding an inorganic nano substance into ultra-high molecular weight polyethylene (UHMWPE) and going through a predetermined manufacturing process including a sudden air cooling, a water-phase solidification, and a multi-stage temperature variation multi-stage temperature-changing drawing process.

2. The ultra-high molecular weight polyethylene/inorganic nanocomposite material of claim 1, wherein the predetermined manufacturing process comprises the steps of a modification, a grafting reaction, a preparation of a gel solution, a vacuum debubbling, a spinning, a sudden air cooling, a water-phase solidification and a multi-stage temperature-changing drawing process of the inorganic nano substance.

3. The ultra-high molecular weight polyethylene/inorganic nanocomposite material of claim 1, wherein the ultra-high molecular weight polyethylene has a molecular weight falling within a range of 1,000,000∼10,000,000.

4. The ultra-high molecular weight polyethylene/inorganic nanocomposite material of claim 2, wherein the inorganic nano substance is an inorganic nano substance processed by a modification, a grafting reaction and a supersonic vibration and having a diameter below 100nm and a length below 1000µm.

5. A high-performance fiber manufacturing method of an ultra-high molecular weight polyethylene/inorganic nanocomposite material, comprising the steps of:
modifying an inorganic nano substance by a carboxylation technology;
performing a grafting reaction for the inorganic nano substance by a grafting agent;
heating and dissolving an ultra-high molecular weight polyethylene with a solvent at a first predetermined temperature for a first predetermined time, while adding the inorganic nano substance after the grafting reaction takes place to prepare a uniform gel solution;
extracting air to vacuum the gel solution by using a vacuum pump, and debubbling the gel solution;
putting the gel solution into a pump, such that the gel solution is squeezed by the pump into a spinneret to produce a gel fiber at a second predetermined temperature and at a first predetermined speed;
putting the gel fiber into an air and water bath tank at a third predetermined temperature to condense the gel fiber into an as-spun fiber;
using a thermal extension machine to perform a first-stage constant temperature extension of the as-spun fiber at a fourth predetermined temperature and a second predetermined speed, and then a second-stage constant temperature extension at a fifth predetermined temperature and the second predetermined speed to produce a high-performance fiber of the ultra-high molecular weight polyethylene/inorganic nanocomposite material.

6. The high-performance fiber manufacturing method of an ultra-high molecular weight polyethylene/inorganic nanocomposite material as recited in claim 5, wherein the inorganic nano substance has an end-group which is a carboxyl group.

7. The high-performance fiber manufacturing method of an ultra-high molecular weight polyethylene/inorganic nanocomposite material as recited in claim 6, wherein the solvent is decalin (decahydronaphthalin, C₁₀H₁₈).

8. The high-performance fiber manufacturing method of an ultra-high molecular weight polyethylene/inorganic nanocomposite material as recited in claim 6, wherein the first predetermined temperature is 100∼150°C.

9. The high-performance fiber manufacturing method of an ultra-high molecular weight polyethylene/inorganic nanocomposite material as recited in claim 5, wherein the first predetermined time is 1∼5 hours.

10. The high-performance fiber manufacturing method of an ultra-high molecular weight polyethylene/inorganic nanocomposite material as recited in claim 6, wherein the pump is a gear pump and/or the spinneret is a dry-jet.

11. The high-performance fiber manufacturing method of an ultra-high molecular weight polyethylene/inorganic nanocomposite material as recited in claim 6, wherein the second predetermined temperature is 150∼180°C and/or the first predetermined speed is 1∼300 m/min.

12. The high-performance fiber manufacturing method of an ultra-high molecular weight polyethylene/inorganic nanocomposite material as recited in claim 6, wherein the third predetermined temperature is 0∼60°C and/or the fourth predetermined temperature is 70∼140°C.

13. The high-performance fiber manufacturing method of an ultra-high molecular weight polyethylene/inorganic nanocomposite material as recited in claim 6, wherein the predetermined multiple is 1.2 -20 times.

14. The high-performance fiber manufacturing method of an ultra-high molecular weight polyethylene/inorganic nanocomposite material as recited in claim 6, wherein the fifth predetermined temperature is 70∼140°C.

15. The high-performance fiber manufacturing method of an ultra-high molecular weight polyethylene/inorganic nanocomposite material as recited in claim 6, wherein the second predetermined speed is 10∼300 mm/min.
